# EUROPEAN PATENT SPECIFICATION

(11) **EP 2 962 495 B1**
(45) Date of publication and mention of the grant of the patent: **22.03.2017**
(21) Application number: 14709132.6
(22) Date of filing: 25.02.2014
(51) Int. Cl.: H04W 4/02, H04W 36/32, H04W 48/16, H04W 12/06, H04W 36/14, H04W 48/18, H04W 88/06

(54) **PREEMPTIVE AUTHENTICATION IN REMOTE LOCAL WIRELESS NETWORK**
PRÄVENTIVE AUTHENTIFIZIERUNG IN EINEM LOKALEN DRAHTLOSEN NETZWERK
AUTHENTIFICATION PRÉEMPTIVE DANS UN RÉSEAU SANS FIL LOCAL DISTANT

(30) Priority: 28.02.2013 US 201313781706
(43) Date of publication of application: 06.01.2016
(73) Proprietor: Microsoft Technology Licensing, LLC, Redmond, WA 98052 (US)
(72) Inventor: GOLAN, Alon, Redmond, Washington 98052-6399 (US); GILLETT, Mark Alastair, Redmond, Washington 98052-6399 (US)
(74) Representative: Driver, Virginia Rozanne
(86) International application number: PCT/US2014/018130
(87) International publication number: WO 2014/133983

(56) References cited:
- EP-A1- 2 418 883
- EP-A1- 2 475 219
- US-A1- 2008 031 194
- US-A1- 2011 310 866

## Description

### BACKGROUND

A mobile terminal such as a mobile phone, tablet or laptop computer is able to connect to wireless networks in order to access wireless communications services, such as wireless access to the Internet. Each network comprises one or more wireless connection points which the mobile terminal can connect to, e.g. the one or more wireless access points of a wireless local area network (WLAN). An access point of a WLAN is arranged to communicate with mobile terminals using a short-range wireless access technology such as Wi-Fi, referring to wireless access technologies based on IEEE 802.11 standards.

The wireless connection points of different networks will be located in different places, resulting in different areas of coverage. Therefore as the user travels about with his or her mobile terminal, the mobile terminal may encounter various different networks at different locations over the course of a day. For example, nowadays WLANs can be found in various public places such as cafés, bars, shops, malls, railway stations, airports, etc. Further, a WLAN may be provided in the office or workplace. A user will often also have a wireless personal area network (WPAN) set up in the home by means of a wireless home router comprising a wireless access point.

For a terminal to connect to a network there has to be a handshake on some level before a data connection can start or resume. The handshake is performed between the mobile terminal and the access point based on a suitable protocol when the mobile terminal is in the network coverage area (or physically connected by a wired connection like an Ethernet cable). For example, for a wireless network enabled terminal to connect to a router, an IEEE 802.11 based protocol (Wi-Fi) will require a four-way handshake and the handshake messages are sent as EAPOL-Key frames. US2008031194A teaches a system that takes into account the user current geo-location, mobility pattern and application running on mobile node; estimates the expected mobility zone and selects an appropriate set of candidate access points corresponding to the mobile node's geo-location. The system assumes that not only the mobile nodes but also the fixed nodes (access points or base stations) are capable of knowing their geo-location coordinates.

### SUMMARY

Currently, this handshake is performed directly with the network's access point. The mobile terminal has to be within coverage range of the wireless access point already (or physically connected to it) in order to perform the handshake.

However, many terminals are also equipped with localisation technology such as GPS (Global Positioning System). A travelling terminal with knowledge of location and travel path, plus knowledge of area networks and their coverage, could predict which network it wants to connect to next, even before entering its coverage area.

Hence according to embodiments disclosed herein, the upcoming availability of a new wireless network such as a new WLAN is predicted in advance, before the mobile terminal reaches its coverage area, and the handshake for connecting to that network is started or even completed through other means. This is done using another, existing connection such as a connection to a mobile cellular network or to a different WLAN which the terminal is currently in range of. Thus the handshake can be conducted pre-emptively, so that a new data connection can potentially be provided faster or more smoothly.

Accordingly, one aspect the disclosure herein relates to a mobile terminal according to claim 1 and comprising transceiver apparatus for communicating with a plurality of wireless networks. Each wireless network comprises one or more respective wireless connection points providing a respective coverage area of that network. The mobile terminal also comprises a location module arranged to determine information on geographical location of the mobile terminal. Based on this information, the location module is able to obtain a prediction that the mobile terminal will enter the coverage area of an expected one of said wireless networks. Further, the mobile terminal comprises a protocol module arranged to at least begin a pre-emptive handshake with the expected wireless network, while the mobile terminal is still outside the respective coverage area and so unable to communicate any information via any of the one or more respective wireless connection points of the expected network. Instead of communicating directly, this is done by performing some or all of the handshake with the expected network via SMS through another of said wireless networks.
Thus based on the pre-emptive handshake, the protocol module is able to establish a wireless connection with one of the one or more respective wireless connection points of the expected wireless network once the mobile terminal is within the respective coverage area.

In some embodiments, the expected wireless network is one that operates according to a first wireless access technology, while said other wireless network is one that operates according to a second, different wireless access technology. For example, the expected network which the mobile terminal is about to connect to may be a WLAN or PLAN using a local (short-range) access technology such as Wi-Fi, while the other network used to convey the pre-emptive handshake may be a wide area cellular network such as a 3GPP network.

In other embodiments said other wireless network operates according to a same wireless access technology as the expected wireless network, for example the mobile terminal is handing over between two different WLANs with different coverage areas, both using a local (short-range) wireless access technology such as Wi-Fi.

In embodiments the location module may determine the location of the mobile terminal using any suitable location technology, e.g. a satellite-based location technology such as GPS, or multilateration between base stations of a mobile cellular network. In embodiments, the location module may obtain the prediction at least in part by referring to another network element such as a location services server having a database of networks and their coverage areas. In other embodiments the prediction may be performed at the mobile terminal, e.g. using a cached database of network coverage areas.

This Summary is provided to introduce a selection of concepts in a simplified form that are further described below in the Detailed Description.

### BRIEF DESCRIPTION OF THE DRAWINGS

For a better understanding of the present disclosure and to show how in embodiments it may be put into effect, reference is made by way of example to the accompanying drawings in which:
Figure 1 is a schematic representation of a wireless communication system,
Figure 2 is a schematic block diagram of a mobile user terminal,
Figure 3 is a schematic representation of the motion of a mobile terminal in a communication system, and
Figure 4 is a signalling diagram schematically illustrating a method of accessing a wireless network according to embodiments of the disclosure herein.

### Detailed Description of Embodiments

Embodiments disclosed herein are provided to expedite switching between networks on a moving terminal. This is achieved by modifying the way the terminal negotiates a connection with the network it wants to connect to next. To expedite things, the handshake with the next network (that the terminal is about to connect to) will be started or done prior to reaching the coverage area of that network.

As mentioned, for a wireless network enabled terminal to connect to a router or other access point, an IEEE 802.11 based protocol (Wi-Fi) will require a four-way handshake. The handshake messages are sent as EAPOL-Key frames, and conventionally the terminal has to be within coverage range of the wireless router (or physically connected to it) in order to perform the handshake. However, a travelling terminal with the knowledge of location and travel path, plus knowledge of area networks and their coverage, could know which network it wants to connect to next, even before entering its coverage area.

According to embodiments, the aim is to take advantage of such pre-provided information, and start performing the handshake with the next network before entering its coverage area. The handshake frames to be sent to the access point are instead sent by other available means, such as via another Wi-Fi network that the mobile terminal is currently within range of, or via a cellular network. The advantage is that time within the coverage area used for handshake will be then spared, which will potentially allow smoother network switching and spending more time within coverage.

To implement this, a mobile terminal and a registrar of an access point will be arranged to communicate the handshake over different levels of network than those described in Wi-Fi protocols like WPA, and the mobile terminal will use its current available connection(s) to start the handshake. The following are some examples of scenarios that could take advantage of such an arrangement.

In one example, a mobile terminal on a moving train is becoming aware that it will enter the coverage area of a Wi-Fi network soon. It then uses one of its current available methods of communication, be it PSTN, mobile data network, another Wi-Fi network, or other, to negotiate a connection with the Wi-Fi network it is about reach. Instead of only starting the connection after entering the coverage area of the new network, the mobile terminal can use the connection as soon as the signal is good enough, since the handshake has already been done. For instance, the mobile terminal may only have this Wi-Fi network available for a short amount of time while the train is stopped at a station, and so it would be desirable to make most use of that time as possible. If the handshake is already done upon arrival, this leaves more time for communicating actual content over the connection.

In another example a person walks down a street. His or her mobile terminal uses its database of open access points in conjunction with GPS to predict future movement relative to the access points. It thus finds an open access point that it predicts will be within range shortly. Instead of waiting to be in that network's range in order to negotiate a handshake with the access point, the mobile terminal sends the access point an http request over its currently available 3G connection. A few minutes later, the terminal actually gets within range of the access point's coverage area, and immediately starts using it for actual data transmission, since the handshake has already taken place.

In yet another example, a mobile terminal is in a car in an area with no data coverage. It does however have GPS and a cached database of nearby open access points. Using this the terminal guesses that, within a short while, it will enter the coverage area of a known access point. It then sends an SMS message to an associated PSTN number of that access point, and the two parties complete the handshake this way. Shortly afterwards the mobile terminal enters the coverage area of the access point. It is immediately able to use the connection for data, since the handshake has already been completed.

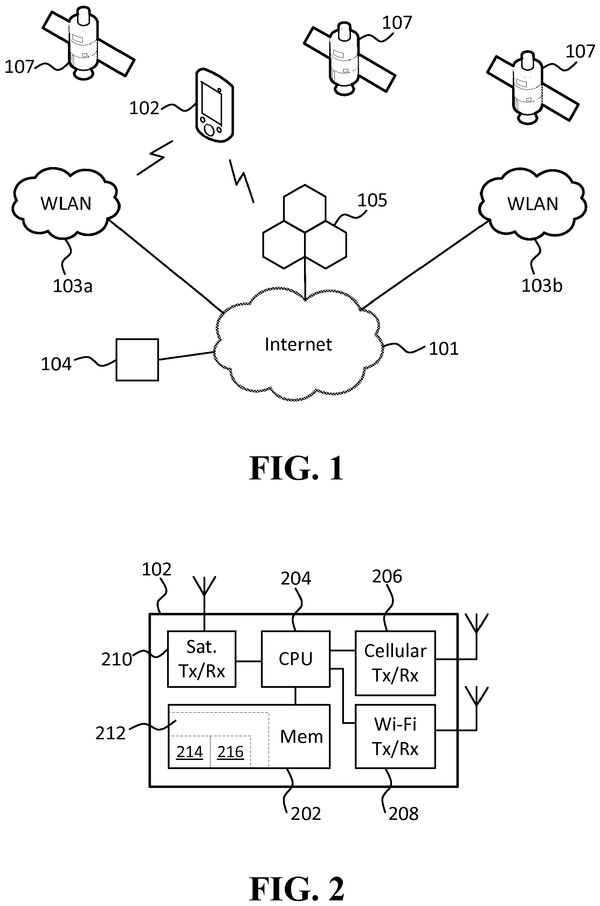

Figure 1 schematically illustrates an example of a communication system in which embodiments disclosed herein may be deployed. The system comprises a device in the form of a first mobile user terminal 102, as well as a number of other user terminals (not shown) which may be fixed or mobile terminals. The illustrated user terminal 102 may be for example a mobile phone, tablet, or laptop computer. Each of the other user terminals may be any user terminal capable of electronic communications, such as a mobile phone, tablet, laptop or desktop computer, TV set, set-top box, games console, etc.

The system also comprises a packet-switched network 101 which may take the form of a public wide-area inter network such as the Internet, or alternatively a private network. Further, the system comprises a plurality of wireless network 103a, 103b (two are illustrated here but it will be appreciated that many more may be present). Any of these may for example take the form of a wireless local area network (WLAN) or a wireless personal area network (WPAN). Each of the wireless networks comprises one or more wireless connection points, e.g. the one or more access points of a WLAN or WPAN. Each such access point comprises a wireless transceiver by which mobile user terminals 102 can connect to the wireless network 103. The wireless transceiver is a short-range local transceiver, being a transceiver that is arranged to operate on one or more unlicensed frequency bands using a wireless access technology such as Wi-Fi.

Each access point also comprises a wired transceiver connecting to the wider packet-switched network 101, e.g. via a router (which may be built in to the same unit as the access point). The mobile terminal 102 can therefore access the packet-switched network 101 via the wireless network 103. This allows the mobile terminal to obtain wireless services, typically including at least Internet access (in embodiments the packet-switched network 101 comprises the Internet). For example the mobile terminal may use the wireless network 103 to conduct voice over IP (VoIP) calls with one or more other user terminals over the Internet 101, or to access the World Wide Web, or use email. According to embodiments disclosed herein, at least some of the wireless networks 103a, 103b are also operable to communicate with one another via the wired connections to the packet-switched network 101, as will be discussed in more detail shortly.

Alternatively or additionally, the packet-switched network 101 connects to a different type of wireless network in the form of a mobile cellular telephone network 105. The mobile cellular network is a wide area network comprising a plurality of base stations providing coverage over a larger area than any one of the wireless local or personal area networks 103a, 103b. Each base station (sometimes referred to as a "node B" in 3GPP terminology) comprises a wireless transceiver by which the mobile terminal can connect to the cellular network 105, arranged to operate on one or more licensed frequency bands using a wireless access technology such as one of the 3GPP (3^{rd} Generation Partnership Project) standards, which include 3G as well as LTE (Long Term Evolution) and 4G Releases.

The cellular network 105 comprises a circuit-switched part and a packet-switched part. It thereby provides a dedicated voice channel for performing circuit-switched phone calls with other mobile user terminals connecting to the cellular network 105, and packet data channel giving an alternative means by which the mobile terminal 102 may access the wider packet-switched network 101 (e.g. Internet access to make VoIP calls, browse the Web or use email). It also comprises a separate signalling channel which, as well as being used for control signalling, can be used to send SMS (Short Messaging Service) messages over the cellular network 105. According to embodiments disclosed herein, the mobile cellular network 105 is arranged to communicate with at least one of the access points of one of the wireless networks 103a, 103b, either via the packet-data channel or by sending an SMS to a PSTN (Public Switched Telephone Network) phone number allocated to the access point of the wireless network in question (e.g. 103b). This will be discussed in more detail shortly.

The mobile terminal 102 is equipped with at least one geographic location technology for determining the location of that mobile user terminal, in terms of geographic position relative to the surface of the earth; for example, a satellite based positioning system such as GPS (Global Positioning System, including potential variants such as assisted GPS or differential GPS), GLONASS (Global Navigation Satellite System) or Galileo; and/or trilateration (or more generally muiltilateration) relative to a plurality of different wireless base stations or access points having known locations; and/or a technique based on detecting signal strength relative to a known base station or access point.

Further, the communication system comprises a location services server 104 connected to the packet-switched network 101 (e.g. Internet). The location services server 104 comprises at least a database of connection points of wireless networks and their respective coverage areas, e.g. access points of a plurality of wireless local area networks and/or base stations of one or more cellular networks. The mobile user terminal 102 is operable to access this database on the server 104 over the packet-switched network 101 via one or more of the wireless networks 103 and/or the data channel of the cellular network 105.

Figure 2 is a schematic block diagram of the mobile user terminal 102. The mobile user terminal 102 comprises a processor 204 in the form of a central processing unit (CPU) comprising one or more cores or execution units, and storage 202 in the form of a memory which comprises one or more memory devices comprising one or more storage media (e.g. a magnetic storage medium such as a hard disk or electronic storage such as EEPROM or "flash" memory). The mobile user terminal 102 also comprises wireless transceiver apparatus in the form of one or more wireless transceivers. In embodiments the transceiver apparatus comprises a local wireless transceiver 208 for connecting to the one or more wireless access points of one or more of the wireless local or personal area networks 103 using the relevant access technology such as Wi-Fi. In embodiments the transceiver apparatus may also comprise a cellular transceiver 206 for connecting to the mobile cellular network 105 using the relevant access technology such as a 3GPP standard (e.g. an LTE or 4G standard). The mobile terminal 102 is thus able to communicate over the packet-switched network 101 via one of the wireless local or personal area networks 103 and/or cellular network 105. In embodiments, the mobile terminal further comprises a satellite receiver 210 such as a GPS receiver, for receiving ranging signals from a plurality of satellites 107 in order to enable satellite based localisation.

The memory 202 stores computer-readable code 212 arranged to be executed on the processor 204, to operate in conjunction with the transceivers 206, 208, 210 via a suitable interconnect with the processor 204. As well as applications for communicating over the Internet 101 (e.g. a VoIP client, web browser and/or email client), the code 212 comprises a location module 214 and a protocol module 216. The location module 214 is responsible for determining information on the geographic location of the mobile terminal 102. Also, based on this information the location module is arranged to obtain a prediction as to which network's coverage area the mobile terminal is expected to enter next. The protocol module 216 is responsible for performing the relevant protocol or protocols involved in setting up connections with one or more types of wireless network such as the WLANs or WPANs 103, and/or cellular network 105. In accordance with embodiments of the present disclosure, the relevant protocol is adapted to include the capability of performing a pre-emptive handshake while still outside the respective coverage area.

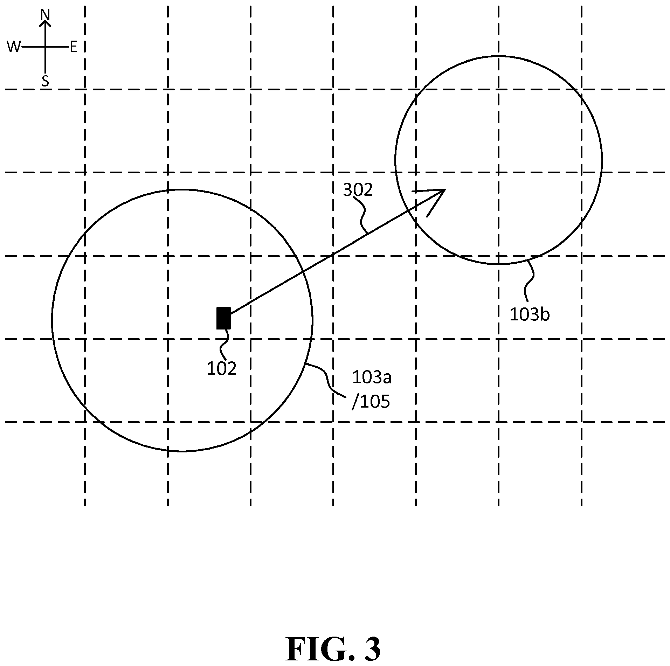

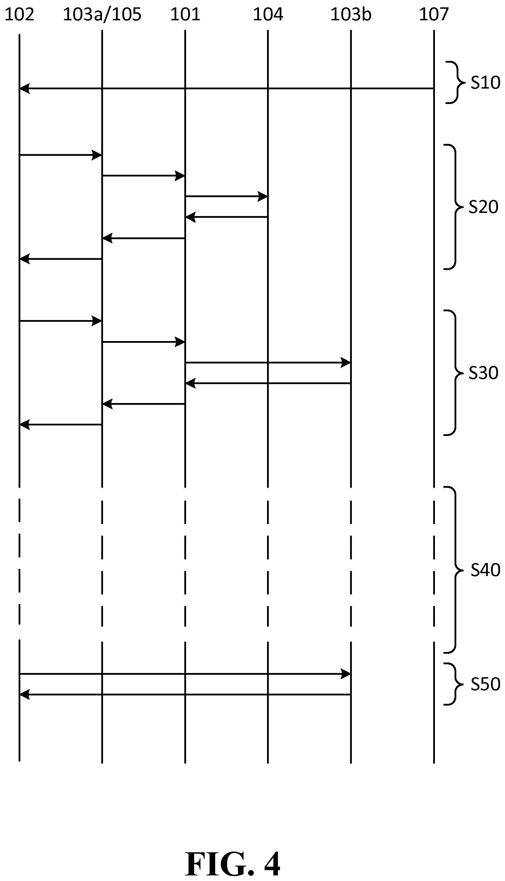

These modules 214, 216 may be configured to operate the mobile terminal 102 as now described with reference to Figures 3 and 4.

Figure 3 is a schematic illustration showing a geographic location of the mobile terminal 102 at some point in time. Here, the mobile terminal 102 finds itself within the coverage area of one of the WLANs of WPANs 103a and/or the cellular network 105. However, it is not currently in the coverage area of other WLANs or WPANs. The following will be described in terms of WLANs, but it will be appreciated the teachings herein can also apply to other area networks like personal networks in the home.

Where it is said that the mobile terminal 102 is not within a coverage area of a wireless network (or not within range), this means it does not have sufficient coverage to be able to communicate any information (at least in the sense that no meaningful use can be made of any weak signal there may be between the two, if any). I.e. it experiences less than a minimum signal strength needed to convey meaningful data between the mobile terminal 102 and the network in question, to the extent that the mobile terminal 102 could not even start establishing a connection by communicating a handshake message directly over the air interface of that network. Nor is it able to detect any identifier of that network sent out by any of its one or more respective access points over the respective air interface. Conversely where it is said that the mobile terminal is within the coverage area (or within range) this means it can communicate meaningful information with the respective network, including to detect an identifier sent out by the one or more respective access points, and to send the first handshake message to establish a connection with that network.

The location module 214 on the mobile terminal 102 is arranged to perform a localisation operation to determine the geographic location of the mobile terminal 102. In embodiments, the determination is done via the satellite receiver 210 using satellite based localisation techniques which in themselves will be familiar to a person skilled in the art (e.g. GPS, GLONASS or Galileo). Alternatively or additionally, the determination may be performed via the cellular transceiver 206 by means of trilateration (or more generally multilateration) with base stations of the cellular network 105, again which in itself will be understood in the art.

Further, by whatever means this localisation is performed, the location module 214 is arranged to determine the location of the mobile terminal 102 at a plurality of different times as it travels about. For example, the location module 214 may be arranged to trigger the localisation operation periodically, or at random intervals, and/or when prompted by the user or in response to some other event or stimulus (e.g. based on a signal from a network it is currently connected to).

By determining the geographic location over time, this enables an expected path 302 of the mobile terminal 102 to be predicted. For example, the predicted path 302 may take the form of a straight line trajectory extrapolated from two or more location points determined by the location module 214 at different times, or a non-linear curve fitted according to two or more points. For example each of a plurality of different functions could be fitted against the available points to determine which fits with least error. A straight line is shown in Figure 3 for illustrative purposes, but it will be appreciated this is only one example for fitting a set of points.

Further, given two or more past locations points of the mobile terminal (or a current point and at least one previous point), it is also possible to estimate a current speed and/or acceleration of the mobile terminal 102 (or even a rate of acceleration, etc.). The path may be predicted for a certain time window into the future, i.e. so it is predicted that if the mobile terminal continues to travel at its current speed or acceleration (or rate of acceleration etc.) along its current trajectory or curve, then it will get so far in a certain time ahead of now. The time window may be based on an approximate time taken to perform a pre-emptive handshake (the mechanism for which is to be discussed in more detail shortly).

Alternatively, if the mobile terminal 102 is travelling along a predetermined route such as a train line, then the future path of the mobile terminal 102 may be predicted given knowledge of the predetermine route. In this example, it is even possible to predict the path based on a single past or current location point, given the time of that point and knowledge of a predetermined timetable for that route (e.g. train timetable); through an estimate of speed or acceleration based on two or more points may be used as well or instead (e.g. to accommodate the possibility of a slower service than scheduled). Either way, the predetermined route may be used to predict that the mobile terminal will reach a certain distance along the route within a certain time window ahead of the present time.

In embodiments, the calculations involved in predicting the expected path 302 may be performed at the location module 214 running on the mobile terminal 102 itself. Alternatively, the path may be predicted by submitting readings from the localisation operation to another network element such as the location serves server 104 (via an existing connection, e.g. to a current WLAN 103a or cellular network 105). In the latter case, some or all of the calculations involved in predicting the path from the location readings may be performed remotely at the server 104, and the server returns a result of the prediction to the mobile terminal 102 (or at least information enabling the result to be completed at the mobile terminal 102).

By whatever means the path is predicted, this can be used to obtain a prediction as to whether the mobile terminal 102 is expected to enter the coverage area of a new wireless network, and if so which network. For example, it may be determined that if the mobile terminal 102 continues along the predicted path then it will find itself within the coverage area of a new WLAN 103b within a certain time window from the present time. Note that "new" herein just means a network that the mobile terminal 102 is not connected to or within range of at the time of the prediction (not necessarily one that the mobile terminal has never encountered before).

The prediction of the upcoming network 103b comprises comparing the predicted path 302 against a database of network coverage areas, mapping a definition of each coverage area to an identifier of the respective network and/or access point(s). In embodiments, the location module 214 may obtain this prediction using a database stored on the mobile terminal 102 itself, e.g. having been previously downloaded from at least part of a database on the location services server 104, or the location module 214 having compiled the database itself based on past experience by detecting where networks have been encountered before. Alternatively, the location module 214 may obtain the prediction by referring to the database stored on the location services server 104 each time a prediction is required. In the latter case, the location module 214 may submit an indication of its predicted path 302 from the mobile terminal 102 to the location services server 104, where the comparison between the path and the coverage areas is performed. The location services server 102 then returns the identifier of the expected network 103b (if any) to the location module 214. In another variant of this, the location module 214 may submit its location points or even raw location measurements from the mobile terminal 102 to the location services sever 104, so that the whole prediction (both of the path 302 and the identify of any expected network 103b) is performed at the sever 104 and the identity of the expected network 103b (if any) is returned to the location services module 214 on the mobile terminal 102. In further embodiments, a combination of any of the above techniques may also be used.

The prediction may be performed at intervals, e.g. periodically, at random intervals, and/or when prompted by the user or in response to some other event or stimulus (e.g. based on a signal from a network it is currently connected to). In embodiments the prediction as to whether there is an expected new network, and if so its identity, may be performed each time the location module 214 takes a new location measurement, or every few measurements.

Based on the above, the location module 214 now has a prediction as to whether the mobile terminal 102 is expected to enter the coverage area of a new network such as a new WLAN 103b, and if so an identification of which network that is. The location module 214 passes this information to the protocol module 216, which in accordance with embodiments of this disclosure it uses to at least pre-emptively initiate a handshake with the impending new network 103b - via another, existing connection with another network such as another WLAN 103a or the cellular network 105.

An example use case would be handover between two WLANs. The mobile terminal 102 is currently connected to a first WLAN, and the location module 214 obtains a prediction that the mobile terminal 102 will soon enter the coverage area of a second WLAN 103b - even though the terminal 102 is not yet currently in that coverage area and so cannot currently establish a connection with that network or communicate over the air interface of its one or more access points. Based on this prediction, the protocol module 216 begins a handshake with the second WLAN 103b via the first WLAN 103a and the packet-switched network 101 (e.g. Internet) which both WLANs 103a, 103b are connected to. Then, assuming the mobile terminal 102 does indeed enter the new coverage area shortly afterwards, at least some of the handshake involved in establishing a connection has already been performed vicariously, allowing the connection to be established more quickly after the mobile terminal 102 enters the new coverage area than it would have been otherwise.

In another example, the mobile terminal 102 currently only experiences coverage from the cellular network 105, which may be more expensive to the user or have worse data services. It may therefore be desirable to switch to a WLAN whenever available. The location module 214 obtains a prediction that the mobile terminal 102 will soon enter the coverage area of a WLAN 103b, and based on this protocol module 216 begins a vicarious handshake with the expected WLAN 103b via the cellular network 105 in order to try to reduce the amount of time needed to complete the connection to the WLAN 103b once within coverage. In this example, the handshake messages may be sent over the data channel of the cellular network 105, and via the packet-switched network 101 (e.g. Internet) to which the expected network 103b is also coupled. Alternatively, and according to the invention, if the mobile terminal experiences no data coverage from the cellular network 105 then one or more handshake messages may instead be sent in the form of one or more SMS messages addressed to a PSTN number of an access point of the expected network 103b. Responses of the handshake may also be sent back from the access point via SMS, to a PSTN number of the mobile terminal 102.

In another example, the mobile terminal 102 currently only has a coverage of a WLAN 103a and/or a cellular network 105, but the user is approaching his or her home where there is a WPAN that he or she would rather use (e.g. consider that the second network 103b in Figures 1 and 3 now refers to a WPAN rather than a WLAN). If the location module 214 has access to at least an indication of the geographic location or extent of the home WPAN - e.g. the user has programmed the location or coverage area of his or her home into the mobile terminal 102 or registered it with the location services server 104, or the location module 214 has learned such information through past experience - then the location module 214 may predict from the user's current path that he or she appears to be nearing home (but is not quite there yet and not within coverage of the WPAN). Based on this prediction, the protocol module 216 performs a vicarious handshake with the WPAN 103b via an existing connection with another type of network such as a WLAN 103a or cellular network 105, and packet-switched network 101 (e.g. internet). Again, this may enable the connection with the new network, in this case a WPAN, to be completed sooner once the mobile terminal does reach the expected network 103b.

Figure 4 is a schematic signalling chart showing a method that may be implemented by the location module 214 together with the protocol module 216 running on the mobile terminal 102.

At Step S10, the location module 214 on mobile user terminal 102 receives ranging signals from a plurality of satellites via the satellite receiver 210, e.g. using GPS. Note that for schematic purposes only one arrow is shown in Figure 4, but it will be appreciated this represents ranging signals from a plurality of satellites. Based on the ranging signals the location module determines an estimated geographical location of the mobile terminal 102, in terms of geographical coordinates relative to the surface of the earth. Alternatively step S10 could be replaced or augmented by another localisation technique such as multilateration from a plurality of base stations (three or more) of the cellular network 105. Either way, step S10 is repeated at different geographic locations of the mobile terminal 102 as it travels about.

At step S20 the location module 214 on the mobile terminal 102 contacts the location services server 104, via a connection with a currently available network such as a WLAN 103a or cellular network 105, in order to query its database of network coverage areas. The location services server 104 sends back a corresponding response via the current network 103a or 105. For example, the location module 214 may calculates a predicted path 302 of the mobile terminal 102 based on a plurality of the geographic positions determined at step S10, and query the location services server 104 for an indication of one or more networks and their coverage areas within the current vicinity of the mobile terminal 102. The location module 214 on the mobile terminal 102 may then compare the path with the nearby coverage area(s), looking a certain time into the future, and determine whether the mobile terminal 102 is expected to reach any of the coverage areas and if so which. Alternatively, the location module 214 may submit an indication of the path 302 from the mobile terminal 102 to the location server 104 in order for the comparison to be performed at the server 104, and the server 104 responds with the identity of any networks that are expected to be encountered soon. In another alternative, the location module 214 may submit just the geographical positions or even the raw GPS readings to the server 104. Note that only one set of arrows is shown under step S20 in Figure 4, but in embodiments this may represent one or more outgoing queries and one or more corresponding responses back and forth between the mobile terminal 102 server 104.

At step S30, the protocol module 216 running on the mobile terminal 102 performs the pre-emptive handshake with the expected network, e.g. an upcoming WLAN 103b, even though the mobile terminal 102 is not currently within coverage of that network. This is achieved by instead sending at least one handshake message from the mobile terminal 102 to the expected network 103b via a connection with another, currently available network such as another WLAN 103a to the cellular network 105, and via the packet-switched network 101 to which both the expected network 103b and the other network 103a or 105 are coupled. One or more reciprocal response messages, also forming part of the handshake, may then be received back at the mobile terminal 102a from the expected network 103b via the connection with the other network 103a or 105, also via the intermediate packet-switched network 101 to which both are coupled. Note again that while one set of arrows is shown in Figure 4 for schematic purposes, in embodiments this may represent one or more outgoing handshake messages from the mobile terminal 102 to the expected network 103b, and one or more corresponding responses from the expected network 103b to the mobile terminal 102. For example, in IEEE 802.11 standards a four-way handshake is required (a first outgoing handshake message, a first response responding to the first outgoing message, a second outgoing handshake message, and a second response responding to the second outgoing message).

At step S40, time passes as the mobile terminal 102 continues to travel. Note that the term traveling as used herein may refer to self-locomotion of the user (walking, running, etc.) or motion by a mode of transport (car, train, etc.), or any way of moving the mobile terminal 102 between different locations.

At step S50 the mobile terminal 102 reaches the coverage area of the expected network 103b. It is now able to establish a wireless connection with the wireless connection point of this new network 103b (e.g. WLAN access point). This means a direct connection, i.e. using the wireless transceiver of the new network's wireless connection point, over the wireless interface between the corresponding wireless transceiver 208 of the mobile terminal 102 and the wireless transceiver of that wireless connection point - not now using a vicarious connection via a connection point of a different network 103a, 105. However, as the handshake has already been completed, the process of establishing the connection can be completed more quickly after entering the new coverage area than it would have been otherwise (i.e. than if the handshake could only now begin).

Note: in embodiments step S30 may represent a complete or partial handshake. If during the process of Figure 4 the mobile terminal 102 enters the coverage area of the new network 103b before the handshake is completed, then any remaining handshake messages and/or responses could be completed directly with the new network 103b over its immediate air interface. Alternatively the whole handshake may be completed vicariously before entering the new coverage area.

It will be appreciated that the above embodiments have been described only by way of example.

Generally, any of the functions described herein can be implemented using software, firmware, hardware (e.g., fixed logic circuitry), or a combination of these implementations. The terms "module", "functionality", "component" and "logic" as used herein generally represent software, firmware, hardware, or a combination thereof. In the case of a software implementation, the module, functionality, or logic represents program code that performs specified tasks when executed on a processor (e.g. CPU or CPUs). The program code can be stored in one or more computer readable memory devices. The features of the techniques described below are platform-independent, meaning that the techniques may be implemented on a variety of commercial computing platforms having a variety of processors.

For example, the user terminals may also include an entity (e.g. software) that causes hardware of the user terminals to perform operations, e.g., processors functional blocks, and so on. For example, the user terminals may include a computer-readable medium that may be configured to maintain instructions that cause the user terminals, and more particularly the operating system and associated hardware of the user terminals to perform operations. Thus, the instructions function to configure the operating system and associated hardware to perform the operations and in this way result in transformation of the operating system and associated hardware to perform functions. The instructions may be provided by the computer-readable medium to the user terminals through a variety of different configurations.

One such configuration of a computer-readable medium is signal bearing medium and thus is configured to transmit the instructions (e.g. as a carrier wave) to the computing device, such as via a network. The computer-readable medium may also be configured as a computer-readable storage medium and thus is not a signal bearing medium. Examples of a computer-readable storage medium include a random-access memory (RAM), read-only memory (ROM), an optical disc, flash memory, hard disk memory, and other memory devices that may us magnetic, optical, and other techniques to store instructions and other data.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A mobile terminal (102) comprising:
transceiver apparatus for communicating with a plurality of wireless networks (103,105), each wireless network (103,105) comprising one or more respective wireless connection points providing a respective coverage area;
a location module (214) arranged to determine information on geographical location of the mobile terminal (102), and based thereon to obtain a prediction that the mobile terminal (102) will enter the coverage area of an expected one of said wireless networks;
a protocol module (216) arranged to at least begin a pre-emptive handshake with the expected wireless network while still outside the respective coverage area and so unable to communicate any information via any of the one or more respective wireless connection points, by instead performing some or all of the handshake with the expected network via another of said wireless networks, and based on said pre-emptive handshake to establish a wireless connection with one of the one or more respective wireless connection points of the expected wireless network once the mobile terminal (102) is within the respective coverage area;
**characterised in that** said other wireless network is a mobile cellular network (105) having a voice channel, a packet data channel, and a signalling channel suitable for SMS, the respective connection points of the mobile cellular network (105) being base stations of the mobile cellular network (105), and the protocol module (216) is arranged to perform some or all of the pre-emptive handshake via SMS when the mobile terminal (102) experiences no coverage on the packet data channel, using a PSTN telephone number of said one of the one or more respective wireless connection points of the expected wireless network.

2. The mobile terminal (102) of claim 1, wherein the expected wireless network is a wireless local area network or wireless personal area network (103a, 103b), the protocol module (216) being arranged to establish said wireless connection with one of the one or more wireless connection points of the expected wireless local area network or personal area network (103).

3. The mobile terminal (102) of claim 1 or 2, wherein the expected wireless network operates according to a first wireless access technology (103) which is different to a mobile cellular network (105).

4. The mobile terminal (102) of any preceding claim, wherein the protocol module (216) is arranged to complete the pre-emptive handshake with the expected wireless network while still outside the respective coverage area and so unable to communicate any information via any of the one or more respective wireless connection points, by instead performing the complete handshake with the expected network via said other wireless network; and
the complete pre-emptive handshake is at least a four way handshake: a first message from the mobile terminal (102) to the expected wireless network, a first response from the expected wireless network to the mobile terminal (102), a second message from the mobile terminal (102) to the expected wireless network, and a second response from the expected wireless network to the mobile terminal (102).

5. The mobile terminal (102) of any preceding claim, wherein the prediction is that the mobile terminal (102) will enter the coverage area of the expected wireless network within a specified time window.

6. The mobile terminal (102) of any preceding claim, wherein:
the location module (214) is arranged to use said information to predict an expected geographical path of the mobile terminal (102), and based thereon to obtain said prediction that the mobile terminal (102) will enter the coverage area of the expected wireless network; or
the location module (214) is arranged to supply said information to a further network element (104) where the information is used to predict an expected geographical path of the mobile terminal (102), and based thereon to obtain said prediction in a response from the further network element (104).

7. A computer program product for operating a mobile terminal (102) to communicate with a plurality of wireless networks (103,105), each wireless network (103,105) comprising one or more respective wireless connection points providing a respective coverage area; the computer program product comprising code embodied on a computer-readable storage medium and configured so as when executed on the mobile terminal (102) to perform operations of:
determining information on geographical location of the mobile terminal (102);
based on said information, obtaining a prediction that the mobile terminal (102) will enter the coverage area of an expected one of said wireless networks (103,105);
at least beginning a pre-emptive handshake with the expected wireless network on behalf of the mobile terminal (102) while still outside the respective coverage area and so unable to communicate any information via any of the one or more respective wireless connection points, by instead performing some or all of the handshake with the expected network via another of said wireless networks; and
based on said pre-emptive handshake, establishing a wireless connection with one of the one or more respective wireless connection points of the expected wireless network once the mobile terminal is within the respective coverage area, wherein said other wireless network is a mobile cellular network (105) having a voice channel, a packet data channel, and a signalling channel suitable for SMS, the respective connection points of the mobile cellular network (105) being base stations of the mobile cellular network (105), and the computer program product is configured to perform some or all of the pre-emptive handshake via SMS when the mobile terminal (102) experiences no coverage on the packet data channel, using a PSTN telephone number of said one of the one or more respective wireless connection points of the expected wireless network.

## Patentansprüche

1. Tragbares Endgerät (102), das Folgendes umfasst:
eine Transceivervorrichtung zum Kommunizieren mit mehreren drahtlosen Netzwerken (103, 105), wobei jedes drahtlose Netzwerk (103, 105) einen oder mehrere jeweilige drahtlose Verbindungspunkte umfasst, die einen jeweiligen Versorgungsbereich bereitstellen;
ein Lokationsmodul (214), das dazu eingerichtet ist, Informationen zu einer geografischen Lokation des tragbaren Endgeräts (102) zu bestimmen und auf der Basis davon eine Vorhersage zu erhalten, dass das tragbare Endgerät (102) in den Versorgungsbereich eines erwarteten der drahtlosen Netzwerke eintreten wird;
ein Protokollmodul (216), das dazu eingerichtet ist, einen präemptiven Handshake mit dem erwarteten drahtlosen Netzwerk zumindest zu beginnen, während es noch außerhalb des jeweiligen Versorgungsbereichs ist und so nicht dazu in der Lage ist, jegliche Informationen mittels eines beliebigen des einen oder der mehreren jeweiligen drahtlosen Verbindungspunkte zu kommunizieren, indem stattdessen ein Teil des oder der gesamte Handshake mit dem erwarteten Netzwerk mittels eines anderen der drahtlosen Netzwerke durchgeführt wird, und auf der Basis des präemptiven Handshakes eine drahtlose Verbindung mit einem des einen oder der mehreren jeweiligen drahtlosen Verbindungspunkte des erwarteten drahtlosen Netzwerks herzustellen, sobald das tragbare Endgerät (102) sich innerhalb des jeweiligen Versorgungsbereichs befindet;
**dadurch gekennzeichnet, dass** das andere drahtlose Netzwerk ein Mobilfunknetzwerk (105) mit einem Sprachkanal, einem Paketdatenkanal und einem für SMS geeigneten Signalisierungskanal ist, die jeweiligen Verbindungspunkte des Mobilfunknetzwerks (105) Basisstationen des Mobilfunknetzwerks (105) sind und das Protokollmodul (216) dazu eingerichtet ist, wenn das tragbare Endgerät (102) keine Versorgung auf dem Paketdatenkanal erfährt, einen Teil des oder den gesamten präemptiven Handshake mittels SMS unter Verwendung einer PTSN-Telefonnummer von dem einen des einen oder der mehreren jeweiligen drahtlosen Verbindungspunkte des erwarteten drahtlosen Netzwerks durchzuführen.

2. Tragbares Endgerät (102) nach Anspruch 1, wobei das erwartete drahtlose Netzwerk ein drahtloses lokales Netzwerk oder drahtloses persönliches Netzwerk (103a, 103b) ist, wobei das Protokollmodul (216) dazu eingerichtet ist, die drahtlose Verbindung mit einem des einen oder der mehreren drahtlosen Verbindungspunkte des erwarteten drahtlosen lokalen Netzwerks oder persönlichen Netzwerks (103) herzustellen.

3. Tragbares Endgerät (102) nach Anspruch 1 oder 2, wobei das erwartete drahtlose Netzwerk gemäß einer ersten drahtlosen Zugangstechnologie (103) arbeitet, die sich von einem Mobilfunknetzwerk (105) unterscheidet.

4. Tragbares Endgerät (102) nach einem vorhergehenden Anspruch, wobei das Protokollmodul (216) dazu eingerichtet ist, den präemptiven Handshake mit dem erwarteten drahtlosen Netzwerk abzuschließen, während es noch außerhalb des jeweiligen Versorgungsbereichs ist und so nicht dazu in der Lage ist, jegliche Informationen mittels eines beliebigen des einen oder der mehreren jeweiligen drahtlosen Verbindungspunkte zu kommunizieren, indem stattdessen der gesamte Handshake mit dem erwarteten Netzwerk mittels des anderen drahtlosen Netzwerks durchgeführt wird; und
der gesamte präemptive Handshake mindestens ein Vier-Wege-Handshake ist: eine erste Nachricht von dem tragbaren Endgerät (102) an das erwartete drahtlose Netzwerk, eine erste Antwort von dem erwarteten drahtlosen Netzwerk an das tragbare Endgerät (102), eine zweite Nachricht von dem tragbaren Endgerät (102) an das erwartete drahtlose Netzwerk und eine zweite Antwort von dem erwarteten drahtlosen Netzwerk an das tragbare Endgerät (102).

5. Tragbares Endgerät (102) nach einem vorhergehenden Anspruch, wobei die Vorhersage darin besteht, dass das tragbare Endgerät (102) innerhalb eines spezifizierten Zeitfensters in den Versorgungsbereich des erwarteten drahtlosen Netzwerks eintreten wird.

6. Tragbares Endgerät (102) nach einem vorhergehenden Anspruch, wobei:
das Lokationsmodul (214) dazu eingerichtet ist, die Informationen dazu zu verwenden, einen erwarteten geografischen Weg des tragbaren Endgeräts (102) vorherzusagen und auf der Basis davon die Vorhersage zu erhalten, dass das tragbare Endgerät (102) in den Versorgungsbereich des erwarteten drahtlosen Netzwerks eintreten wird; oder
das Lokationsmodul (214) dazu eingerichtet ist, die Informationen an ein weiteres Netzwerkelement (104) zu liefern, wo die Informationen dazu verwendet werden, einen erwarteten geografischen Weg des tragbaren Endgeräts (102) vorherzusagen und auf der Basis davon die Vorhersage in einer Antwort von dem weiteren Netzwerkelement (104) zu erhalten.

7. Computerprogrammprodukt zum Betreiben eines tragbaren Endgeräts (102), um mit mehreren drahtlosen Netzwerken (103, 105) zu kommunizieren, wobei jedes drahtlose Netzwerk (103, 105) einen oder mehrere jeweilige drahtlose Verbindungspunkte umfasst, die einen jeweiligen Versorgungsbereich bereitstellen; wobei das Computerprogrammprodukt Code umfasst, der auf einem computerlesbaren Speichermedium verkörpert ist und so konfiguriert ist, dass er bei Ausführung auf dem tragbaren Endgerät (102) die folgenden Vorgänge durchführt:
Bestimmen von Informationen zu einer geografischen Lokation des tragbaren Endgeräts (102) zu bestimmen
auf der Basis der Informationen Erhalten einer Vorhersage, dass das tragbare Endgerät (102) in den Versorgungsbereich eines erwarteten der drahtlosen Netzwerke eintreten wird;
zumindest Beginnen eines präemptiven Handshakes mit dem erwarteten drahtlosen Netzwerk im Auftrag des tragbaren Endgeräts (102), während es noch außerhalb des jeweiligen Versorgungsbereichs ist und so nicht dazu in der Lage ist, jegliche Informationen mittels eines beliebigen des einen oder der mehreren jeweiligen drahtlosen Verbindungspunkte zu kommunizieren, indem stattdessen ein Teil des oder der gesamte Handshake mit dem erwarteten Netzwerk mittels eines anderen der drahtlosen Netzwerke durchgeführt wird; und
auf der Basis des präemptiven Handshakes Herstellen einer drahtlosen Verbindung mit einem des einen oder der mehreren jeweiligen drahtlosen Verbindungspunkte des erwarteten drahtlosen Netzwerks, sobald das tragbare Endgerät sich innerhalb des jeweiligen Versorgungsbereichs befindet, wobei das andere drahtlose Netzwerk ein Mobilfunknetzwerk (105) mit einem Sprachkanal, einem Paketdatenkanal und einem für SMS geeigneten Signalisierungskanal ist, die jeweiligen Verbindungspunkte des Mobilfunknetzwerks (105) Basisstationen des Mobilfunknetzwerks (105) sind und das Computerprogrammprodukt dazu konfiguriert ist, wenn das tragbare Endgerät (102) keine Versorgung auf dem Paketdatenkanal erfährt, einen Teil des oder den gesamten präemptiven Handshake mittels SMS unter Verwendung einer PTSN-Telefonnummer von dem einen des einen oder der mehreren jeweiligen drahtlosen Verbindungspunkte des erwarteten drahtlosen Netzwerks durchzuführen.

## Revendications

1. Un terminal mobile (102) comprenant :
un appareil émetteur-récepteur permettant de communiquer avec une pluralité de réseaux sans fil (103, 105), chaque réseau sans fil (103, 105) comprenant un ou plusieurs points de connexion sans fil respectifs assurant une zone de couverture respective ;
un module de localisation (214) agencé pour déterminer des informations sur la localisation géographique du terminal mobile (102), et sur cette base pour obtenir une prédiction que le terminal mobile (102) va entrer dans la zone de couverture d'un desdits réseaux sans fil attendus ;
un module de protocole (216) agencé pour au moins commencer une liaison préemptive avec le réseau sans fil prévu alors qu'il est encore hors de la zone de couverture respective et donc incapable de communiquer des informations via un ou plusieurs points de connexion sans fil respectifs, en effectuant à la place tout ou partie de la liaison avec le réseau prévu via un autre desdits réseaux sans fil, et sur la base de ladite liaison préemptive pour établir une connexion sans fil avec un des points de connexion sans fil respectifs du réseau sans fil prévu une fois que le terminal mobile (102) est à l'intérieur de la zone de couverture respective ;
**caractérisé en ce que** ledit autre réseau est un réseau cellulaire mobile (105) ayant un canal vocal, un canal de données en paquets et un canal de signalisation approprié pour les SMS, les points de connexion respectifs du réseau cellulaire mobile (105) étant des stations de base du réseau cellulaire mobile(105), et le module de protocole (216) est agencé pour effectuer tout ou partie de la liaison préemptive via SMS lorsque le terminal mobile (102) n'a pas de couverture sur le canal de données en paquets, en utilisant un numéro de téléphone PSTN dudit ou desdits points de connexion sans fil respectifs du réseau sans fil prévu.

2. Le terminal mobile (102) selon la revendication 1, dans lequel le réseau sans fil prévu est un réseau local sans fil ou un réseau personnel sans fil (103a, 103b), le module de protocole (216) étant agencé pour établir ladite connexion sans fil avec ledit ou lesdits points de connexion sans fil du réseau local sans fil ou du réseau personnel prévu (103).

3. Le terminal mobile (102) selon la revendication 1 ou 2, dans lequel le réseau sans fil prévu fonctionne selon une première technologie d'accès sans fil (103) qui est différente d'un réseau cellulaire mobile (105).

4. Le terminal mobile (102) selon l'une quelconque des revendications précédentes, dans lequel le module de protocole (216) est agencé pour achever la liaison préemptive avec le réseau sans fil prévu alors qu'il est encore hors de la zone de couverture respective et donc incapable de communiquer des informations via un dudit ou desdits points de connexion sans fil respectifs, en effectuant à la place la liaison complète avec le réseau prévu via ledit autre réseau sans fil ; et
la liaison préemptive complète est au moins une liaison à quatre voies : un premier message depuis le terminal mobile (102) vers le réseau sans fil prévu, une première réponse du réseau sans fil prévu vers le terminal mobile (102), un deuxième message depuis le terminal mobile (102) vers le réseau sans fil prévu, et une deuxième réponse du réseau sans fil prévu vers le terminal mobile (102).

5. Le terminal mobile (102) selon l'une quelconque des revendications précédentes, dans lequel la prédiction est que le terminal mobile (102) va entrer dans la zone de couverture du réseau sans fil prévu à l'intérieur d'une fenêtre temporelle spécifiée.

6. Le terminal mobile (102) selon l'une quelconque des revendications précédentes, dans lequel :
le module de localisation (214) est agencé pour utiliser lesdites informations pour prédire un trajet géographique prévu du terminal mobile (102) et sur cette base pour obtenir ladite prédiction que le terminal mobile (102) va entrer dans la zone de couverture du réseau sans fil prévu ; ou
le module de localisation (214) est agencé pour fournir lesdites informations à un autre élément de réseau (104) où les informations sont utilisées pour prédire un trajet géographique prévu du terminal mobile (102), et sur cette base pour obtenir ladite prédiction dans une réponse de l'autre élément de réseau (104).

7. Un produit de programme informatique pour faire fonctionner un terminal mobile (102) pour communiquer avec une pluralité de réseaux sans fil (103, 105), chaque réseau sans fil (103, 105) comprenant un ou plusieurs points de connexion sans fil respectifs fournissant une zone de couverture respective ; le produit de programme informatique comprenant un code intégré sur un support à mémoire lisible par ordinateur et configuré de manière à, lors de l'exécution sur le terminal mobile (102), effectuer les opérations consistant à :
déterminer des informations sur la localisation géographique du terminal mobile (102) ;
sur la base desdites informations, obtenir une prédiction que le terminal mobile (102) va entrer dans la zone de couverture d'un desdits réseaux sans fil (103, 105) ;
au moins commencer une liaison préemptive avec le réseau sans fil prévu pour le compte du terminal mobile (102) alors qu'il est encore hors de la zone de couverture respective et donc incapable de communiquer des informations via un dudit ou desdits points de connexion sans fil respectifs, en effectuant à la place tout ou partie de la liaison avec le réseau prévu via un autre desdits réseaux sans fil ; et
sur la base de ladite liaison préemptive, établir une connexion sans fil avec un dudit ou desdits points de connexion sans fil respectifs du réseau sans fil prévu une fois que le terminal mobile est à l'intérieur de la zone de couverture respective, dans lequel ledit autre réseau sans fil est un réseau cellulaire mobile (105), ayant un canal vocal, un canal de données en paquets et un canal de signalisation approprié pour les SMS, les points de connexion respectifs du réseau cellulaire mobile étant des stations de base du réseau cellulaire mobile (105), et le module de protocole est agencé pour effectuer tout ou partie de la liaison préemptive via SMS lorsque le terminal mobile (102) n'a pas de couverture sur le canal de données en paquets, en utilisant un numéro de téléphone PSTN dudit ou desdits points de connexion sans fil respectifs du réseau sans fil prévu.
